# EUROPÄISCHE PATENTSCHRIFT

(11) **EP 2 825 784 B1**
(45) Veröffentlichungstag und Bekanntmachung des Hinweises auf die Patenterteilung: **18.05.2016**
(21) Anmeldenummer: 13709812.5
(22) Anmeldetag: 01.03.2013
(51) Int. Cl.: F16C 37/00, F16C 21/00, F16C 27/04, F16C 33/58, F16C 33/66, F16C 19/06

(54) **WÄLZLAGERANORDNUNG**
ROLLING BEARING ASSEMBLY
ENSEMBLE PALIER À ROULEMENT

(30) Priorität: 14.03.2012 DE 102012203933
(43) Veröffentlichungstag der Anmeldung: 21.01.2015
(73) Patentinhaber: Schaeffler Technologies AG & Co. KG, 91074 Herzogenaurach (DE)
(72) Erfinder: SEBALD, Wilhelm, 97631 Bad Königshofen (DE); GLÖCKNER, Peter, 97424 Schweinfurt (DE); EBERT, Franz-Josef, 97762 Hammelburg (DE)
(86) Internationale Anmeldenummer: PCT/EP2013/054141
(87) Internationale Veröffentlichungsnummer: WO 2013/135497

(56) Entgegenhaltungen:
- DE-A1- 10 340 261
- DE-A1- 19 847 206
- DE-A1-102008 059 566
- DE-A1-102009 056 662

## Beschreibung

### Gebiet der Erfindung

Die Erfindung betrifft eine Wälzlageranordnung nach dem Oberbegriff des Anspruchs 1. Eine derartige Wälzlageranordnung ist beispielsweise aus der DE 10 2009 056 662 A1 bekannt.

Ein gattungsgemäßes Wälzlager stellt, wie in der DE 10 2009 056 662 A1 ausgeführt, ein Hochleistungs-Wälzlager dar, insbesondere zur Anwendung bei Triebswerklagerungen oder Hauptwellenlagerungen in hochdrehenden Gasturbinen, Getrieben, sowie Rotorlagerungen in Hubschraubern.

### Hintergrund der Erfindung

Bei derartigen Einsatzfällen von Wälzlagern entstehen in einem Kontaktbereich zwischen Wälzkörpern und Lagerringen solcher Lager aufgrund sehr hoher Betriebsdrehzahlen bei äußerst hohen Belastungen leicht Betriebstemperaturen von weit über 200°C. Die bei den hohen Umdrehungszahlen durch Reibleistung entstehende Wärme muss zur Vermeidung von Lagerschäden zuverlässig und zügig abgeführt werden. Dazu werden Wälzlager - Kühlsysteme eingesetzt, wie sie prinzipiell beispielsweise auch aus der DE 10 2006 024 603 A1 bekannt sind.

Gleichzeitig treten bei beschriebenen Einsatzfällen von Hochleistungs-Wälzlagern auch axiale und radiale Schwingungen auf, welchen mit Dämpfungssystemen effektiv entgegengewirkt werden kann. Ein solches Dämpfungssystem ist prinzipiell beispielsweise aus der DE 10 2008 032 921 A1 bekannt.

Eine kombinierte Lagerkühlung und -dämpfung ist aus der eingangs zitierten DE 10 2009 056 662 A1 bekannt. Hierbei ist zwischen einem Lageraußenring und einem Gehäuse ein ringförmiges Zwischenelement angeordnet, wobei zwischen dem Außenring und dem Zwischenelement eine Kühlzone ausgebildet ist und zwischen dem Zwischenelement und dem Gehäuse ein Dämpfungssystem ausgebildet ist.

### Aufgabe der Erfindung

Der Erfindung liegt die Aufgabe zugrunde, eine insbesondere für Flugzeugtriebwerke sowie stationäre Gasturbinen geeignete Wälzlageranordnung mit Kühlung und Dämpfung gegenüber dem genannten Stand der Technik insbesondere hinsichtlich des Herstellungs- und Betriebsaufwandes weiterzuentwickeln.

### Zusammenfassung der Erfindung

Diese Aufgabe wird erfindungsgemäß gelöst durch eine Wälzlageranordnung gemäß Anspruch 1.

Diese Wälzlageranordnung weist zumindest einen Wälzlageraußenring eines Wälzlagers, ein ringförmiges Zwischenelement und ein Gehäuseteil auf, wobei das Wälzlager derart in das Gehäuseteil einsetzbar ist, dass das Zwischenelement zwischen dem Wälzlageraußenring und dem Gehäuseteil angeordnet ist, wobei sich zwischen dem Wälzlageraußenring und dem Zwischenelement eine erste Kontaktzone und sich zwischen dem Zwischenelement und dem Gehäuseteil eine zweite Kontaktzone ausbildet.

An der ersten Kontaktzone ist ein Kühlsystem ausgebildet, wobei das Kühlsystem mindestens eine mit einem Kühlmittel, insbesondere flüssigen Kühlmittel, durchströmbare Kühlausnehmung, insbesondere einen Kühlkanal, aufweist.

An der zweiten Kontaktzone ist ein Dämpfungssystem ausgebildet, wobei das Dämpfungssystem mindestens eine Dämpfungsausnehmung aufweist, über welche ein Dämpfungshohlraum, z.B. ein Spalt, in der zweiten Kontaktzone mit einem Dämpfungsmedium befüllbar ist.

Im Unterschied zum Stand der Technik ist bei der erfindungsgemäßen Wälzlageranordnung der Außenring drehbar im Zwischenring angeordnet. An einer Stirnseite des Außenrings befindet sich eine umlaufende Ölfangleiste, welche dazu ausgebildet ist, Öl aufzufangen und zur ersten Kontaktzone zu fördern.

Ein wesentlicher Vorteil der erfindungsgemäßen Wälzlageranordnung besteht darin, dass durch den drehenden, mit einer Ölfangleiste versehenen Außenring im Wälzlager befindliches, beispielsweise seitlich des Lagers eingespritztes Öl unter Ausnutzung der Zentrifugalkraft gezielt der zu kühlenden Kontaktzone zwischen Außenring und Zwischenelement zugeführt wird.

In bevorzugter Ausgestaltung ist das Kühlsystem in der ersten Kontaktzone mit dem Dämpfungssystem in der zweiten Kontaktzone fluidtechnisch verbunden. Somit sorgt ein einziges Fluidsystem sowohl für die Kühlung als auch für die Dämpfung der Wälzlageranordnung. Die Viskosität des kombinierten Kühl- und Dämpfungsmediums, vorzugsweise -öls, wird derart gewählt, dass sowohl eine ausreichende Durchströmung der ersten Kontaktzone und damit eine ausreichende Kühlwirkung, als auch eine ausreichende Dämpfungswirkung erzielt wird.

Gemäß einer ersten Variante weist der Außenring auf dessen der Ölfangleiste gegenüberliegender Stirnseite mindestens eine Ölaustrittsbohrung auf. Die Ölaustrittsbohrung kann auch durch eine zwischen dem Außenring und dem Zwischenelement ausgeformte Nut gebildet sein.

Gemäß einer zweiten Variante weist das Zwischenelement eine die erste Kontaktzone mit der zweiten Kontaktzone verbindende Ölübertrittsleitung auf. Die Rotation des Außenrings sorgt hierbei maßgeblich dafür, dass Kühl- und Dämpfungsmedium von der ersten Kontaktzone, das heißt vom Kühlsystem, zur zweiten Kontaktzone, das heißt zum Dämpfungssystem, gefördert wird. Im Gegensatz zum Außenring ist das Zwischenelement nicht rotierbar im Gehäuse angeordnet.

### Kurze Beschreibung der Zeichnung

Ausführungsbeispiele der Erfindung werden nachfolgend anhand von Figuren beschrieben. Dabei zeigen:
- Fig. 1:: einen Ausschnitt einer Wälzlageranordnung in einer Querschnittsdarstellung gemäß einem ersten Ausführungsbeispiel,
- Fig. 2:: einen Ausschnitt einer Wälzlageranordnung in einer Querschnittsdarstellung gemäß einem zweiten Ausführungsbeispiel.

### Ausführliche Beschreibung der Zeichnung

Einander entsprechende oder gleichwirkende Teile sind in beiden Figuren mit den gleichen Bezugszeichen gekennzeichnet.

In beiden Figuren ist jeweils eine Wälzlageranordnung eines Strahltriebwerks dargestellt, hinsichtlich deren grundsätzlicher Funktion auf den eingangs zitierten Stand der Technik verwiesen wird. Die folgenden Ausführungen beziehen sich, soweit nicht anders vermerkt, auf beide Ausführungsbeispiele.

Die Wälzlageranordnung umfasst Lagerringe 1,4, nämlich einen Innenring 1 und einen Außenring 4, zwischen welchen Wälzkörper 2, nämlich Kugeln, die mittels eines Käfigs 3 geführt sind, abrollen. Am Außenumfang des Außenrings 4 ist in diesen ein Kühlkanal 5 eingeformt. Der Außenring 4 ist radial umgeben von einem ringförmigen Zwischenelement 9, welches auch als Lagerumring bezeichnet wird. Der Kühlkanal 5 bildet somit eine Komponente eines Kühlsystems an einer ersten Kontaktzone zwischen Außenring 4 und Zwischenelement 9. Der Außenring 4 ist rotierbar im Zwischenelement 9 angeordnet.

Eine zweite Kontaktzone ist zwischen dem Zwischenelement 9 und einem nicht dargestellten Gehäuse, in welchem das Zwischenelement 9 aufgenommen ist, gebildet. An dieser zweiten Kontaktzone ist ein Dämpfungssystem ausgebildet, wobei das Dämpfungsmedium, nämlich Dämpfungsöl, mit dem durch den Kühlkanal 5 strömenden Medium identisch ist. Das Zwischenelement 9 ist verdrehgesichert in das Gehäuse eingesetzt.

Das Kühl- und Dämpfungsöl wird durch eine Öldüse 13, welche auf einer Stirnseite der Lagerringe 1,4 angeordnet ist, abgegeben. Von dort aus trifft es teilweise auf eine Ölfangleiste 6, welche stirnseitig an den Außenring 4 angeformt ist. Im dargestellten Querschnitt ist die Ölfangleiste 6 keilförmig ausgebildet, wobei sich die radial innere Oberfläche der Ölfangleiste 6 zur Stirnseite des Lagerrings 4 hin aufweitet und somit eine konische Form beschreibt. Unmittelbar der Ölfangleiste 6 benachbart befindet sich innerhalb des Lagerrings 4 eine Ölbohrung 7, durch welche das von der Ölfangleiste 6 aufgefangene Kühl- und Dämpfungsmedium zum Kühlkanal 5 geleitet wird. Die Förderung des Öls von der Ölfangleiste 6 durch die schräg gestellte Ölbohrung 7 und weiter durch den Kühlkanal 5 erfolgt durch Zentrifugalkraft aufgrund der Rotation des Außenrings 4.

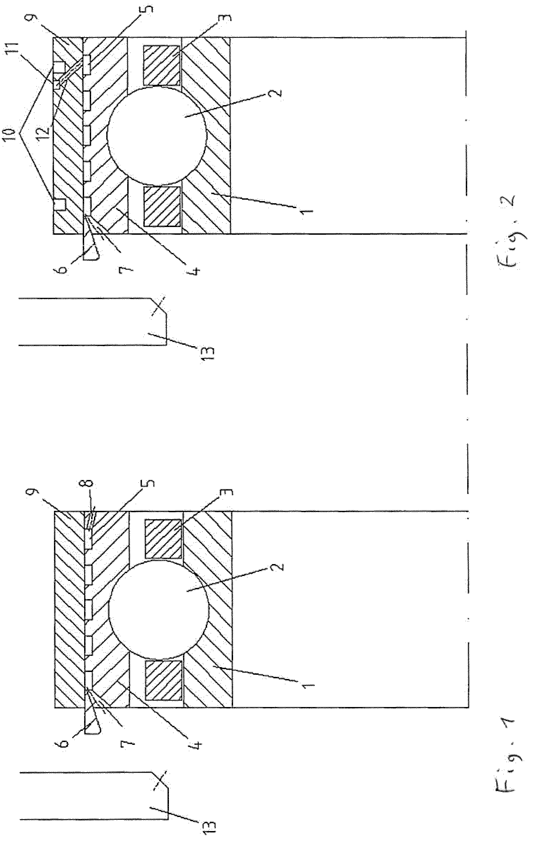

Im Ausführungsbeispiel nach Fig. 1 tritt das durch den Kühlkanal 5 strömende Öl auf der der Ölfangleiste 6 gegenüberliegenden Stirnseite des Außenrings 4 durch eine im Außenring 4 befindliche Ölaustrittsbohrung 8 stirnseitig aus dem Außenring 4 aus.

Im Ausführungsbeispiel nach Fig. 2 fließt das Öl vom Kühlkanal 5 durch eine im Zwischenelement 9 befindliche Ölübertrittsleitung 12 direkt zu einer umlaufenden Ölverteilungsnut 11 an der Außenoberfläche des Zwischenelementes 9, welche eine Komponente des Dämpfungssystems darstellt. Wie aus Fig. 2 weiter hervorgeht, befinden sich an der Außenoberfläche des Zwischenelementes 9 auch zwei Kolbenringnuten 10, die eine Abdichtung des in der zweiten Kontaktzone gebildeten Quetschölfilms ermöglichen. Das Dämpfungssystem wird ausschließlich über die Ölübertrittsleitung 12 mit Öl versorgt. Aus dem Dämpfungssystem austretendes Öl wird, einen geschlossenen Ölkreislauf bildend, zur Öldüse 13 zurückgeführt.

### Bezugszeichen

- 1: Lagerring, Innenring
- 2: Wälzkörper, Kugel
- 3: Käfig
- 4: Lagerring, Außenring
- 5: Kühlkanal
- 6: Ölfangleiste
- 7: Ölbohrung
- 8: Ölaustrittsbohrung
- 9: Zwischenelement
- 10: Kolbenringnut
- 11: Ölverteilungsnut
- 12: Ölübertrittsleitung
- 13: Öldüse

## Patentansprüche

1. Wälzlageranordnung mit zumindest einem Außenring (4) eines Wälzlagers, einem ringförmigen Zwischenelement (9) und einem Gehäuse, wobei das Wälzlager derart in das Gehäuse einsetzbar ist, dass das Zwischenelement (9) zwischen dem Außenring (4) und dem Gehäuse angeordnet ist, wobei sich zwischen dem Außenring (4) und dem Zwischenelement (9) eine erste Kontaktzone ausbildet und sich zwischen dem Zwischenelement (9) und dem Gehäuse eine zweite Kontaktzone ausbildet,
- wobei an der ersten Kontaktzone ein Kühlsystem ausgebildet ist,
- wobei das Kühlsystem mindestens eine mit einem Kühlmittel durchströmbare Kühlausnehmung, insbesondere einen Kühlkanal (5), aufweist,
- wobei an der zweiten Kontaktzone ein Dämpfungssystem ausgebildet ist,
- wobei das Dämpfungssystem mindestens eine Dämpfungsausnehmung aufweist, über welche ein Dämpfungshohlraum in der zweiten Kontaktzone mit einem Dämpfungsmedium befüllbar ist,
**dadurch gekennzeichnet, dass**
- der Außenring (4) drehbar im Zwischenelement (9) angeordnet ist,
- sich an einer Stirnseite des Außenrings (4) eine umlaufende Ölfangleiste (6) befindet, welche dazu ausgebildet ist, Öl zur ersten Kontaktzone zu fördern.

2. Wälzlageranordnung nach Anspruch 1, **dadurch gekennzeichnet, dass** das Kühlsystem in der ersten Kontaktzone mit dem Dämpfungssystem in der zweiten Kontaktzone fluidtechnisch verbunden ist.

3. Wälzlageranordnung nach Anspruch 2, **dadurch gekennzeichnet, dass** der Außenring (4) auf dessen der Ölfangleiste (6) gegenüberliegender Stirnseite eine Ölaustrittsbohrung (8) aufweist.

4. Wälzlageranordnung nach Anspruch 2, **dadurch gekennzeichnet, dass** das Zwischenelement (9) eine die erste Kontaktzone mit der zweiten Kontaktzone verbindende Ölübertrittsleitung (12) aufweist.

5. Verwendung einer Wälzlageranordnung nach Anspruch 1 in einer Gasturbine.

6. Verwendung einer Wälzlageranordnung nach Anspruch 1 als Rotorlagerung in einem Hubschrauber.

## Claims

1. Rolling bearing arrangement comprising at least an outer ring (4) of a rolling bearing, an annular intermediate element (9) and a housing, wherein the rolling bearing can be inserted into the housing in such a way that the intermediate element (9) is arranged between the outer ring (4) and the housing, wherein a first contact zone is formed between the outer ring (4) and the intermediate element (9) and a second contact zone is formed between the intermediate element (9) and the housing,
- wherein a cooling system is formed on the first contact zone,
- wherein the cooling system has at least one cooling recess, in particular a cooling channel (5), through which a coolant can flow,
- wherein a damping system is formed on the second contact zone,
- wherein the damping system has at least one damping recess by means of which a damping cavity in the second contact zone can be filled with a damping medium,
**characterized in that**
- the outer ring (4) is arranged rotatably in the intermediate element (9),
- a circumferential oil-catching strip (6) is situated on an end face of the outer ring (4) and is designed to convey oil to the first contact zone.

2. Rolling bearing arrangement according to Claim 1, **characterized in that** the cooling system in the first contact zone is fluidically connected to the damping system in the second contact zone.

3. Rolling bearing arrangement according to Claim 2, **characterized in that** the outer ring (4) has an oil outlet bore (8) on its end face opposite the oil-catching strip (6).

4. Rolling bearing arrangement according to Claim 2, **characterized in that** the intermediate element (9) has an oil transfer line (12) connecting the first contact zone to the second contact zone.

5. Use of a rolling bearing arrangement according to Claim 1 in a gas turbine.

6. Use of a rolling bearing arrangement according to Claim 1 as a rotor bearing in a helicopter.

## Revendications

1. Agencement de palier à roulement comprenant au moins une bague extérieure (4) d'un palier à roulement, un élément intermédiaire annulaire (9) et un logement, le palier à roulement pouvant être inséré dans le logement de telle sorte que l'élément intermédiaire (9) soit disposé entre la bague extérieure (4) et le logement, une première zone de contact étant créée entre la bague extérieure (4) et l'élément intermédiaire (9), et une deuxième zone de contact étant créée entre l'élément intermédiaire (9) et le logement,
- un système de refroidissement étant réalisé au niveau de la première zone de contact,
- le système de refroidissement présentant au moins un évidement de refroidissement, notamment un canal de refroidissement (5), pouvant être parcouru par un réfrigérant,
- un système d'amortissement étant réalisé au niveau de la deuxième zone de contact,
- le système d'amortissement présentant au moins un évidement d'amortissement, par le biais duquel une cavité d'amortissement dans la deuxième zone de contact peut être remplie avec un milieu d'amortissement,
**caractérisé en ce que**
- la bague extérieure (4) est disposée de manière à pouvoir tourner dans l'élément intermédiaire (9),
- une baguette de collecte d'huile (6) périphérique se trouve au niveau d'un côté frontal de la bague extérieure (4), laquelle est réalisée de manière à transporter de l'huile vers la première zone de contact.

2. Agencement de palier à roulement selon la revendication 1, **caractérisé en ce que** le système de refroidissement dans la première zone de contact est connecté par une technique fluidique au système d'amortissement dans la deuxième zone de contact.

3. Agencement de palier à roulement selon la revendication 2, **caractérisé en ce que** la bague extérieure (4) présente, sur son côté frontal opposé à la baguette de collecte d'huile (6), un alésage de sortie d'huile (8).

4. Agencement de palier à roulement selon la revendication 2, **caractérisé en ce que** l'élément intermédiaire (9) présente une conduite de débordement d'huile (12) reliant la première zone de contact à la deuxième zone de contact.

5. Utilisation d'un agencement de palier à roulement selon la revendication 1 dans une turbine à gaz.

6. Utilisation d'un agencement de palier à roulement selon la revendication 1 en tant que support de rotor dans un hélicoptère.
